# EUROPEAN PATENT APPLICATION

(11) **EP 4 800 824 A1**
(43) Date of publication of application: **02.09.2026**
(21) Application number: 24881093.9
(22) Date of filing: 09.07.2024
(51) Int. Cl.: H01M 50/244, H01M 50/204, H01M 50/289, B65D 90/00, B65D 88/12, H01M 10/613, H01M 10/6568, B65D 88/74

(54) **ENERGY STORAGE APPARATUS AND CONTAINER THEREFOR**

(30) Priority: 24.10.2023 CN 202322858858 U
(71) Applicant: Contemporary Amperex Technology Co., Limited, Ningde, Fujian 352100 (CN)
(72) Inventor: WU, Kai, Ningde, Fujian 352100 (CN); LIU, Chen, Ningde, Fujian 352100 (CN); WANG, Guotao, Ningde, Fujian 352100 (CN); MENG, Kai, Ningde, Fujian 352100 (CN); LI, Jiaqi, Ningde, Fujian 352100 (CN); YANG, Jiandong, Ningde, Fujian 352100 (CN)
(74) Representative: Ran, Handong
(86) International application number: PCT/CN2024/104413
(87) International publication number: WO 2025/086720

(57) **Abstract**

An energy storage apparatus (10) and a container (20) therefor. The container (20) comprises a box body (21) and battery cells (30). The battery cells (30) are accommodated in the box body (21). The dimension of the container (20) in the length direction and the dimension thereof in the width direction are respectively consistent with the dimensions of a standard container, and the dimension h of the container (20) in the height direction is smaller than the dimension H of one standard container in the height direction of the container (20).

## Description

### CROSS-REFERENCE TO RELATED APPLICATIONS

The present application claims priority to Chinese Patent Application No. 202322858858.9, entitled "ENERGY STORAGE APPARATUS AND CONTAINER THEREFOR" filed on October 24, 2023, which is incorporated herein by reference in its entirety.

### TECHNICAL FIELD

The present application relates to the technical field of energy storage, and in particular, to an energy storage apparatus and an energy storage system.

### BACKGROUND

With the rapid development of sciences and technologies, electric energy has become an indispensable energy source in people's production and life. To improve the smooth supply of electric energy and achieve normal operation of production and life, it is necessary to use an energy storage apparatus. The energy storage apparatus, which is used as an apparatus for cyclically storing and discharging electric energy, achieves energy storage in the energy storage apparatus by charging or discharging the energy storage apparatus, or supply the electric energy stored in the energy storage apparatus to an electrical device. Energy storage apparatuses are widely applied to fields such as industrial power supply, household power supply, temporary power supply, mobile power supply, wind power supply, solar power supply, and energy storage power stations.

During the development of energy storage apparatuses, in addition to improving the performance of the energy storage apparatuses, how to reduce the use costs of an energy storage apparatus is also a non-negligible problem. Therefore, how to reduce the use cost of an energy storage apparatus is a technical challenge that requires continuous improvement in energy storage technology.

### SUMMARY

The present application provides an energy storage apparatus and a container therefor, so that the use cost of the energy storage apparatus can be reduced.

In a first aspect, the container provided according to an embodiment of the present application includes a box body and battery cells. The battery cells are accommodated inside the box body. A dimension of the container in a length direction and a dimension of the container in a width direction are respectively consistent with the dimensions of a standard container. A dimension h of the container in a height direction is smaller than a dimension H of a standard container in a height direction of the container.

For the container provided in an embodiment of the present application, by setting the dimension h of the container in the height direction to be smaller than the dimension of a standard container in the height direction, the height of the container during transportation does not exceed the height of a corresponding standard container for sea or land transportation in the height direction of the container, which is conducive to improving convenience for the container during transportation and reducing the transportation cost of the container and the energy storage apparatus for which the container is used.

In some embodiments, |2h-H| ≤ 5 mm or |3h-H| ≤ 5 mm. On the one hand, the use of structural members in the box body can be reduced, and the weight of battery cells per unit volume is increased; on the other hand, this is conducive to fully utilizing the available space in a height direction Z during transportation, reducing space waste during container transportation, and thus contributing to reduction in transportation costs.

In some embodiments, the weight of the container is smaller than or equal to 45 tons. During the lifting of the container, lifting by a relevant lifting device and the transfer operation of the container are facilitated.

In some embodiments, the weight of the container is M, a total weight of the battery cells in the box body is M1, and M1/M ≥ 60%. Thus, on the one hand, the weight proportion of battery cells per unit volume of the container and the energy capacity per unit volume of the container can be increased; on the other hand, during container transportation, battery cells that contribute to energy storage capacity and cannot be produced at the destination due to relatively high production difficulty are mostly transported, while other structures can be produced in places closer to the destination without transportation or with reduced transportation. Assembling the container into an energy storage apparatus is conducive to reducing the transportation cost of the assembled energy storage apparatus.

In some embodiments, M1/M ≥ 80%. Thus, this is further conducive to reducing the transportation cost of the assembled energy storage apparatus.

In some embodiments, a volume of the container is V, a total volume of the battery cells in the box body is v, and v/V ≥ 30%. Thus, on the one hand, the volume proportion of battery cells per unit volume of the container and the energy capacity per unit volume of the container can be increased; on the other hand, during container transportation, battery cells that contribute to energy storage capacity and cannot be produced at the destination due to relatively high production difficulty are mostly transported, while other functional elements, such as control elements, for the energy storage apparatus can be produced in places closer to the destination without transportation or with reduced transportation. Assembling the container into an energy storage apparatus is conducive to reducing the transportation cost of the assembled energy storage apparatus.

In some embodiments, v/V ≥ 50%. Thus, this is further conducive to reducing the transportation cost of the assembled energy storage apparatus.

In some embodiments, a top of the box body is provided with a plurality of lifting portions, and the plurality of lifting portions are configured to be capable of engaging with a spreader, so as to lift the container. By engaging the spreader with the lifting portions, the container is lifted up, which contributes to the stacking of the container in the height direction or the lifting of the container during transportation.

In some embodiments, the lifting portion includes a load-bearing portion, a receptacle, and an opening. The receptacle is located inside the load-bearing portion. The opening brings the receptacle in communication with an exterior of the receptacle. The opening is located at a top of the load-bearing portion. The structure of the lifting portion is simple, facilitating the lifting of the container.

In some embodiments, a bottom of the box body has a limit pin. The limit pin is used for restrained engagement with the box body of an adjacent container. By means of the simple structure, the purpose of restricting the relative movement between two adjacent containers is achieved.

In some embodiments, a plurality of batteries arranged in rows and columns are provided inside the box body, and each of the batteries includes a plurality of battery cells.

In a second aspect, the energy storage apparatus provided according to an embodiment of the present application includes the container provided by any one of the above embodiments.

Since the container provided in any one of the above embodiments is used, the energy storage apparatus provided in the embodiments of the present application exhibits the same technical effect, which will not be repeated here.

In some embodiments, the energy storage apparatus includes m containers. m is a positive integer greater than or equal to 2. The m containers are stacked in a height direction. |h1+...+hm-nH| ≤ 5n (mm), in which h1, ... and hm are respectively dimensions of the m containers in the height direction, and n is a positive integer. Thus, this is conducive to achieving a height of m stacked containers that is equivalent to a dimension of n standard containers in the height direction Z of the container 20 and meets relevant error requirements. Thus, this is conducive to further reducing the transportation cost of the energy storage apparatus as compared to non-standard containers within other dimension ranges.

In some embodiments, n ≤ 8. Thus, relevant load requirements during transportation are easily met.

In some embodiments, m ≤ 12. This is conducive to improving the structural stability of the energy storage apparatus, and the load-bearing capacity of the bottommost container can be reduced, which contributes to reducing the load-bearing capacity of the container.

In some embodiments, m ≤ 8. This is conducive to further improving the structural stability of the energy storage apparatus and further reducing the requirement for the load-bearing capacity of the container.

In some embodiments, two containers adjacent in the height direction are snap-fitted or connected via fasteners. This is conducive to reducing the risk of relative movement between two adjacent containers after stacking, which thus contributes to improving the structural stability of the energy storage apparatus.

In some embodiments, the containers include a first container and a second container. The first container is located above the second container. A limit pin is provided at a bottom of the first container. A limit hole is provided at a top of the second container. The limit pin is snap-fitted to the limit hole. Thus, by means of the simple structure, the purpose of restricting the relative movement between two adjacent containers is achieved.

In some embodiments, the bottom of the first container is provided with a first position-limiting member. The first position-limiting member is provided with a limit recess. A top of the second container is provided with a second position-limiting member. The second position-limiting member is provided with a limit hole. Two ends of the limit pin are snap-fitted to the limit recess and the limit hole, respectively. Thus, by means of the simple structure, the purpose of restricting the relative movement between two adjacent containers is achieved.

In some embodiments, the energy storage apparatus further includes an electrical compartment and an electrical element. The electrical element is accommodated in the electrical compartment. The electrical element is electrically connected to the battery cells in the plurality of containers of the energy storage apparatus. Thus, the electrical element does not occupy the weight and volume of the container and can be manufactured and transported separately from the container, which is conducive to reducing the transportation cost of the energy storage apparatus.

In some embodiments, the energy storage apparatus further includes a water chilling unit. The water chilling unit is used for heat exchange with the plurality of containers in the energy storage apparatus. The water chilling unit is arranged outside the container. The water chilling unit does not occupy the weight and volume of the container and can be manufactured and transported separately from the container, which is conducive to further reducing the transportation cost of the energy storage apparatus.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For those of ordinary skill in the art, other accompanying drawings can also be obtained based on the drawings without any creative effort.
FIG. 1 is a schematic structural view of a container provided by an embodiment of the present application;
FIG. 2 is an exploded schematic structural view of a battery cell in a container provided by an embodiment of the present application;
FIG. 3 is a partial enlarged view at position A in FIG. 1;
FIG. 4 is a partial schematic structural view of one step during the lifting of a container provided by an embodiment of the present application;
FIG. 5 is a partial schematic structural view of another step during the lifting of the container provided by an embodiment of the present application;
FIG. 6 is a partial schematic structural view of one step during the lifting of another container provided by an embodiment of the present application;
FIG. 7 is a partial schematic structural view of another step during the lifting of another container provided by an embodiment of the present application;
FIG. 8 is a schematic structural view of an energy storage apparatus provided by an embodiment of the present application;
FIG. 9 is a schematic structural view of the engagement of two adjacent containers in an energy storage apparatus provided by an embodiment of the present application;
FIG. 10 is a schematic structural view of the engagement of two adjacent containers in another energy storage apparatus provided by an embodiment of the present application;
FIG. 11 is a schematic structural view of the engagement of two adjacent containers in a further energy storage apparatus provided by an embodiment of the present application;
FIG. 12 is a schematic structural view of a limit pin in FIG. 11; and
FIG. 13 is a schematic structural view of another energy storage apparatus provided by an embodiment of the present application.

In the drawings, the drawings are not drawn to actual scale.

Description of reference numerals:
10. Energy storage apparatus;
20. container; 20a. first container; 20b. second container; 21. box body; 211. framework; 212. maintenance door; 22. lifting portion; 221. load-bearing portion; 222. receptacle; 223. opening; 23. first position-limiting member; 231. limit recess; 24. second position-limiting member; and 241. limit hole;
30. battery cell; 31. shell; 31a. accommodating cavity; and 32. electrode assembly;
40. fastener; 41. limit pin; 411. body; and 412. flange;
50. electrical compartment; and 51. electrical element;
60. water chilling unit;
70. spreader; and
X. length direction; Y. width direction; and Z. height direction.

### DETAILED DESCRIPTION

The embodiments of the present application will be further described in detail with reference to the drawings and embodiments. The following detailed description of the embodiments and the drawings are used to illustrate the principles of the present application by way of example; however, they cannot be used to limit the scope of the present application, that is, the present application is not limited to the described embodiments.

In the description of the present application, it should be noted that, unless otherwise stated, "a plurality of" means two or more. The orientation or positional relationships indicated by the terms "upper", "lower", "left", "right", "inside", "outside", etc. are merely intended to facilitate the description of the present application and simplify the description, rather than to indicate or imply that the device or element referred to must have a particular orientation or be constructed and operated in a particular orientation, and therefore, these terms cannot be construed as limiting the present application. In addition, terms "first", "second", etc. are only used for descriptive purposes and cannot be understood as indicating or implying relative importance. "Perpendicular" does not mean perpendicular in a strict sense, but rather within an allowable range of error. "Parallel" does not mean parallel in a strict sense, but rather within an allowable range of error.

Reference to "an embodiment" in the present application means that a particular feature, structure or characteristic described with reference to the embodiment may be included in at least one embodiment of the present application. The appearance of this phrase in various places in the specification does not necessarily refer to the same embodiment, nor is it an independent or alternative embodiment mutually exclusive with other embodiments. A person skilled in the art explicitly or implicitly understands that the embodiments described in the present application may be combined with other embodiments.

In the description of the present application, it needs to be noted that unless otherwise explicitly specified or defined, the terms "install", "link", and "connect" should be understood in a broad sense. For example, the connection may be fixed connection, detachable connection, or integral connection; or the connection may be either direct connection or indirect connection via an intermediary. For those of ordinary skill in the art, the specific meanings of the above terms in the present application can be understood as the case may be.

In the present application, "plurality" refers to two or more (including two).

In the present application, the battery cell may include lithium-ion secondary battery cells, lithium-ion primary battery cells, lithium-sulfur battery cells, sodium-and-lithium-ion battery cells, sodium-ion battery cells, or magnesium-ion battery cells, etc. This is not limited in the embodiments of the present application. The battery cell can be cylindrical, flat, cuboid, or in other shapes. This is not limited in the embodiments of the present application.

A battery mentioned in an embodiment of the present application can include one or more battery cells so as to provide a single physical module having a higher voltage and capacity. When a plurality of battery cells are provided, the plurality of battery cells are connected in series, or in parallel, or in series-parallel by a busbar component.

In some embodiments, the battery can be a battery module. When a plurality of battery cells are provided, the plurality of battery cells are arranged and fixed to form a battery module.

In some embodiments, the battery can be a battery pack. The battery pack include an accommodating box and a battery cell. The battery cell or battery module is accommodated in the accommodating box.

In some embodiments, energy storage apparatuses include an energy storage container, an energy storage electric cabinet, etc.

The battery cell generally includes an electrode assembly. The electrode assembly includes a positive electrode, a negative electrode, and a separator. During the charging and discharging of the battery cell, active ions (for example, lithium ions) are intercalated and deintercalated back and forth between the positive electrode and the negative electrode. The separator is arranged between the positive electrode and the negative electrode and can mainly serve to prevent a short circuit between the positive and negative electrodes while allowing active ions to pass through.

Optionally, the electrode assembly has a wound structure. The positive electrode plate and the negative electrode plate are wound into a wound structure.

Optionally, the electrode assembly has a laminated structure.

Optionally, the shape of the electrode assembly can be cylindrical, flat, polygonal prism-shaped, etc.

An energy storage apparatus generally has a relatively heavy weight and a relatively large volume. In order to reduce transportation costs, the energy storage apparatus is generally transported by sea transportation. However, in the related art, the height of an energy storage apparatus does not quite match the height of a standard container and generally exceeds the height of the standard container, thus increasing the transportation cost and use cost of the energy storage apparatus.

In view of this, an embodiment of the present application proposes a new technical solution, and the technical solution described in the embodiment of the present application is suitable for containers and energy storage apparatuses including containers.

The energy storage apparatus can be used in energy storage power stations, wind power generation systems, solar power generation systems, mobile power systems, temporary power supply systems, etc. Energy storage power stations can store electric energy during low electricity consumption periods, while during peak consumption periods, they supply electric energy to relevant users or electrical equipment. A wind turbine generator set of a wind power generation system converts collected wind energy into electric energy, which is then stored by an energy storage apparatus. A solar power generation system can convert solar energy into electric energy, which is then stored by an energy storage apparatus and supplied to users when appropriate. Mobile power systems can supply power to relevant electrical equipment in places unreachable by a grid power supply system, such as remote mountainous areas and isolated wilderness regions. Temporary power supply systems can supply power to users in cases where the power supply is insufficient. The energy storage system provided by the embodiment of the present application can be any power system that requires the use of an energy storage apparatus.

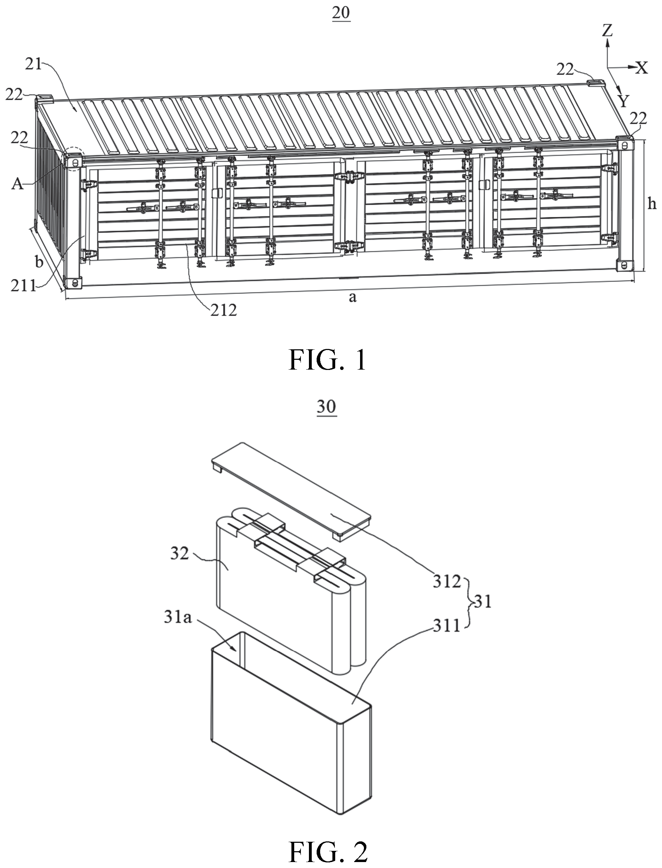

As shown in FIG. 2, the battery cell 30 described in the embodiment of the present application includes an electrode assembly 32 and a shell 31. The shell 31 has an accommodating cavity 31a. The electrode assembly 32 is accommodated in the accommodating cavity 31a.

The shell 31 includes a case 311 and an end cover 312. During the assembly of the battery cell 30, the electrode assembly 32 can be put into the accommodating cavity 31a first, the case 311 is then covered by the end cover 312, and then, an electrolyte is injected into the accommodating cavity 31a through an electrolyte injection port on the end cover 312.

Optionally, the shell 31 can also be used for accommodating an electrolyte, such as an electrolyte. The shell 31 can be in various structural forms.

The shell 31 can be in various shapes, such as cylindrical and cuboid. The shape of the shell 31 can be determined based on the specific shape of the electrode assembly 32. For example, if the electrode assembly 32 has a cylindrical structure, a cylindrical structure can be selected as the shell 31. If the electrode assembly 32 has a cuboid structure, a cuboid structure can be selected as the shell 31. In FIG. 2, by way of example, the shell 31 and the electrode assembly 32 both have cuboid structures.

The shell 31 can be made of various materials, such as copper, iron, aluminum, stainless steel, or an aluminum alloy. This is not particularly limited in the embodiments of the present application.

There may be one or more electrode assemblies 32 accommodated in the shell 31. In FIG. 2, there may be two electrode assemblies 32 accommodated in the shell 31.

As shown in FIGS. 1 and 2, the container 20 provided according to an embodiment of the present application includes a box body 21 and battery cells 30. The battery cells 30 are accommodated inside the box body 21. A dimension a of the container 20 in a length direction X and a dimension b of the container in a width direction Y are respectively consistent with the dimensions of a standard container. A dimension h of the container 20 in a height direction Z is smaller than a dimension H of a standard container in the height direction Z of the container 20.

Where the container 20 includes battery cells 30, the container 20 can include a plurality of battery cells 30. The plurality of battery cells 30 are connected in series or in parallel with each other to form a corresponding energy storage unit of the container 20. When in use, a plurality of containers 20 can be connected in series or in parallel to obtain an energy storage apparatus 10 having corresponding power.

Where the container 20 includes battery cells 30, the container 20 can only include the battery cells 30, or relevant functional elements such as control elements and firefighting elements can also be integrated in the container 20.

The dimensions of the container 20 need to be smaller than or equal to those of a standard container during transportation. The standard container can have standard container dimensions during transportation, such as 20 feet, 30 feet, 40 feet, or 45 feet, which meet corresponding standards, and the length, width, and height thereof respectively have corresponding dimensions.

By way of example, according to GB/T 1413-2008, GBT1413-2023, and international common dimensions, the dimension H, in the height direction Z, of a standard container having a length of 6058 mm can be 2591 mm, 2438 mm, < 2438 mm, 2896 mm, etc. The dimension H, in the height direction Z, of a standard container having a length of 9125 mm can be 2896 mm, 2591 mm, < 2438 mm, 2438 mm, etc.

Where a dimension a of the container 20 in a length direction X and a dimension b of the container in a width direction Y are respectively consistent with the dimensions of a standard container, it does not mean that the length and width of the container 20 are completely equal to the length and width of the standard container, respectively, but rather that they can have a particular error within an allowable range of error. By way of example, according to GB/T 1413-2008, a difference between the dimension a of the container 20 in the length direction X and the dimension of a standard container in the length direction X of the container 20 falls within a range of ± 10 mm, and a difference between the dimension b of the container 20 in the width direction Y and the dimension of the standard container in the width direction Y of the container 20 falls within a range of ± 5 mm.

Where the dimension h of the container 20 in the height direction Z is smaller than the dimension H of a standard container in the height direction Z of the container 20, 2h can be set to be smaller than or equal to H, or 3h can be set to be smaller than or equal to H, so that the height of a plurality of containers 20 stacked in the height direction Z is equivalent to the height H of a standard container.

Of course, it is also possible to set the sum of the dimensions of three containers 20 stacked in the height direction Z to be the same as the dimensions H of two standard containers stacked in the height direction Z, so that in the height direction Z of the container 20, the dimensions of three containers 20 stacked in the height direction Z are equivalent to the dimensions of two standard containers stacked in the height direction Z.

For the container 20 provided in an embodiment of the present application, by setting the dimension h of the container 20 in the height direction Z to be smaller than the dimension of a standard container in the height direction Z, the height of the container 20 during transportation does not exceed the height of a corresponding standard container for sea or land transportation, which is conducive for improving convenience for the container 20 during transportation and reducing the transportation cost of the container 20 and the energy storage apparatus 10 for which the container 20 is used.

In some embodiments, |2h-H| ≤ 5 mm.

By way of example, |2h-H| can be 0, 1 mm, 2 mm, 3 mm, 4 mm, 5 mm, etc.

On the one hand, the height of a container 20 is equivalent to half the height of a standard container, so that the use of structural members in the box body can be reduced, and the weight of battery cells 30 per unit volume is increased; on the other hand, two containers 20, after being stacked in the height direction Z, are equivalent to the dimension H of a standard container in the height direction Z, which is conducive to fully utilizing the available space in the height direction Z during transportation, reducing space waste during container 20 transportation, and thus contributing to reduction in transportation costs.

In some embodiments, |3h-H| ≤ 5 mm.

By way of example, |3h-H| can be 0, 1 mm, 2 mm, 3 mm, 4 mm, 5 mm, etc.

On the one hand, the height of a container 20 is equivalent to one third of the height of a standard container, so that the use of structural members in the box body can be reduced, and the weight of battery cells 30 per unit volume is increased; on the other hand, three containers 20, after being stacked in the height direction Z, are equivalent to the dimension H of a standard container in the height direction Z of the container 20, which is conducive to fully utilizing the available space in the height direction Z during transportation, reducing space waste during container 20 transportation, and thus contributing to reduction in transportation costs.

In some embodiments, the weight of the container 20 is smaller than or equal to 45 tons.

By way of example, the weight of the container 20 can be 10 tons, 15 tons, 20 tons, 25 tons, 30 tons, 35 tons, 40 tons, 45 tons, etc.

During the transfer of the container 20, a relevant lifting device is required to lift and position the container 20 onto another container 20 or the ground. However, the load-bearing capacity of the relevant lifting device is typically limited, and a maximum load-bearing capacity is typically 45 tons. The weight of the container 20 is typically set to be smaller than or equal to 45 tons, facilitating the lifting operation of the relevant lifting device during the lifting of the container 20, thereby facilitating the transfer of the container 20.

In some embodiments, the weight of the container 20 is M, and the total weight of the battery cells 30 in the box body 21 is M1, and M1/M ≥ 60%.

In the case of M1/M ≥ 60%, M1/M ≥ 60%, M1/M ≥ 70%, M1/M ≥ 80%, M1/M ≥ 90%, etc. can be optionally set. By way of example, M1/M can be 60%, 61%, 62%, 63%, 64%, 65%, 66%, 67%, 68%, 69%, 70%, 71%, 72%, 73%, 74%, 75%, 76%, 77%, 78%, 79%, 80%, 85%, etc.

It can be understood that the higher the weight of the battery cells 30 in the box body 21, the higher the energy storage capacity of the container 20, and the higher the energy density of the container 20. Thus, the weight proportion of battery cells 30 per unit volume of the container and the energy capacity per unit volume of the container 20 can be increased. In addition, during container 20 transportation, battery cells 30 that contribute to energy storage capacity and cannot be produced at the destination due to relatively high production difficulty are mostly transported, while other structures can be produced in places closer to the destination without transportation or with reduced transportation. Assembling the container 20 into an energy storage apparatus 10 is conducive to reducing the transportation cost of the assembled energy storage apparatus 10.

In some embodiments, M1/M ≥ 80%.

Optionally, M1/M can be 80%, 81%, 82%, 83%, 84%, 85%, 86%, 87%, 88%, 89%, 90%, etc.

Thus, the volume proportion of the battery cells 30 per unit volume of the container 20 can be increased, and the energy storage capacity per unit volume the container 20 is improved. The container 20 can be loaded with more battery cells 30. During transportation, the container 20 can transport more battery cells 30 that have high production difficulty and contribute to energy storage capacity, without the need for transporting or transporting as few other related functional elements for the energy storage apparatus 10 as possible. Assembling the container 20 into the energy storage apparatus 10 is further conducive to reducing the transportation cost of the assembled energy storage apparatus 10.

In some embodiments, a volume of the container 20 is V, a total volume of the battery cells 30 in the box body 21 is v, and v/V ≥ 30%.

In the case of v/V ≥ 30%, optionally, v/V ≥ 40% can be set. By way of example, v/V can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, 70%, etc.

It can be understood that the more the volume of the container 20 that the battery cells 30 occupy, the more conducive it is to improve the energy storage and energy storage density of the container 20. Thus, less or no related functional elements can be loaded in the container 20, which makes it possible to load as many battery cells 30, etc. as possible. Thus, during container 20 transportation, battery cells 30 that contribute to energy storage capacity and cannot be produced at the destination due to relatively high production difficulty are mostly transported, while other functional elements, such as control elements, for the energy storage apparatus 10 can be produced in places closer to the destination without transportation or with reduced transportation. Assembling the container 20 into an energy storage apparatus 10 is conducive to reducing the transportation cost of the assembled energy storage apparatus 10.

In some embodiments, v/V ≥ 50%.

Optionally, v/V can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, 90%, etc.

Thus, the container 20 can be loaded with more battery cells 30. During transportation, the container 20 can transport more battery cells 30 that have high production difficulty and contribute to energy storage capacity, without the need for transporting or transporting as few other related functional elements for the energy storage apparatus 10 as possible. Assembling the container 20 into the energy storage apparatus 10 is further conducive to reducing the transportation cost of the assembled energy storage apparatus 10.

As shown in FIGS. 1, 3, and 4, in some embodiments, a top of the box body 21 has a plurality of lifting portions 22, and the plurality of lifting portions 22 are configured to be capable of engaging with a spreader 70, so as to lift the container 20.

Where the lifting portions 22 are located at the top of the box body 21, the lifting portions 22 can be above the box body 21 in the height direction Z, and the lifting portions 22 can be formed integrally with the box body 21, or relevant lifting portions 22 can be specially arranged at the top of the box body 21.

Optionally, the box body 21 can be provided with one or more lifting portions 22, and a plurality of lifting portions 22 can be arranged at a plurality of positions to facilitate the lifting of the container 20.

In addition, after being lifted in place, the container 20 can be engaged, by means of the lifting portions 22 at the top of the container 20, with a container 20 above same in the height direction Z, thereby achieving restrained engagement between the two adjacent containers 20.

The lifting portion 22 can be any structure capable of loading the container 20 and engaging with a structure such as a hook of the spreader 70, so that the container 20 is lifted by the spreader 70, thereby facilitating the stacking of the container 20 in the height direction Z or the lifting of the container 20 during transportation.

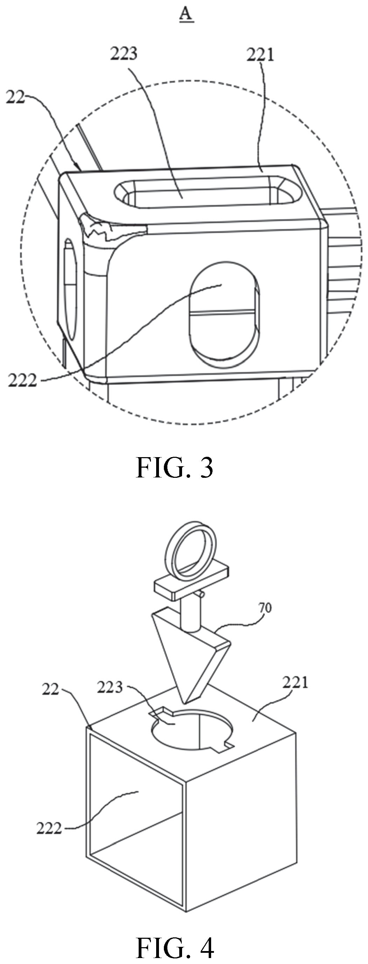

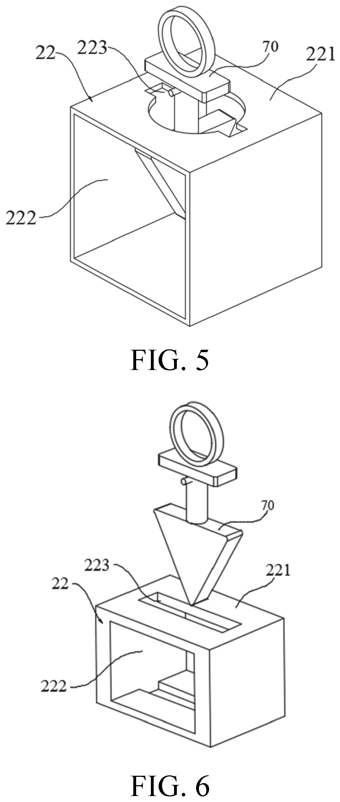

As shown in FIGS. 4 to 7, in some embodiments, the lifting portion 22 includes a load-bearing portion 221, a receptacle 222, and an opening 223. The receptacle 222 is located inside the load-bearing portion 221. The opening 223 brings the receptacle 222 in communication with an exterior of the receptacle 222. The opening 223 is located at a top of the load-bearing portion 221.

During lifting, a lifting head of the spreader 70, etc., can enter the receptacle 222 through the opening 223, and the lifting head of the spreader 70 is then rotated, so that the lifting head is engaged with the load-bearing portion 221, allowing the container 20 to be lifted.

The shape of the opening 223 can be elongated, round, etc. Of course, the shape can also be irregular and can be configured according to actual requirements.

Therefore, the lifting portion 22 is configured to include a load-bearing portion 221, a receptacle 222, and an opening 223. The lifting portion 22 has a simple structure, facilitating the lifting of the container 20.

Optionally, as shown in FIG. 1, in some embodiments, the top of the box body 21 is provided with four lifting portions 22, and the four lifting portions 22 are arranged diagonally in pairs.

Thus, during the lifting of the container 20, the four lifting portions 22 are lifted to maintain the container 20 in a stable and level position, thus facilitating engagement and alignment between the container 20 and the container 20 below same, thereby facilitating the lifting and stacking operations of the container 20.

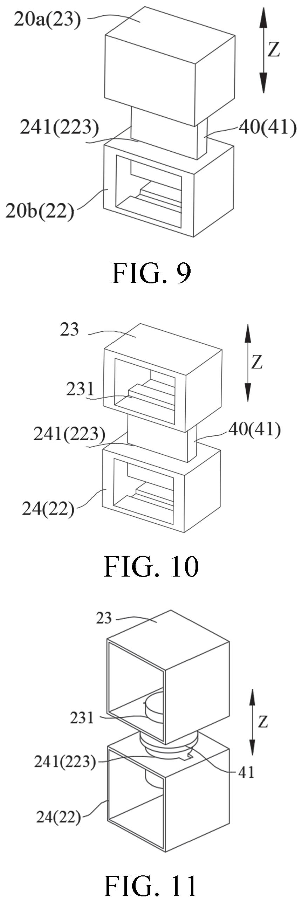

As shown in FIG. 9., in some embodiments, a bottom of the box body 21 has a limit pin 41. The limit pin 41 is used for restrained engagement with the box body 21 of an adjacent container 20.

Thus, during the stacking of containers 20 in the height direction Z, limit pins 41 can be used to restrain the displacement between two adjacent containers 20 in the height direction Z and restrain the displacement between the two adjacent containers 20 in the direction intersecting with the height direction Z, thereby reducing the risk of relative movement between the two adjacent containers 20.

In some embodiments, a plurality of batteries arranged in rows and columns are provided inside the box body 21, and each of the batteries includes a plurality of battery cells 30.

The battery can be in a structural form of battery module or battery pack. Thus, a plurality of battery cells 30 are connected in series or parallel to form a battery. A plurality of batteries are arranged in rows and columns and connected in series or parallel to form an energy storage unit having relatively high power, which is conducive to placing more battery cells 30 with sufficient utilization of the space inside the box body 21, thereby facilitating the improvement of the energy capacity and energy density of the container 20.

With continued reference to FIG. 1, in some embodiments, the box body 21 includes a framework 211 and a maintenance door 212. The maintenance door 212 is movably connected to the framework 211, so as to open or close the maintenance door 212.

Where the maintenance door 212 is movably connected to the framework 211, the maintenance door 212 can be detached from the framework 211 or can rotate relative to the framework 211, so as to open or close the maintenance door 212.

The box body 21 is configured to include a maintenance door 212, and the maintenance door 212 is configured to be movably connected to the framework 211. In the event of malfunction in the container 20 during operation, it is convenient to perform replacement or maintenance operation on components inside the container 20 by opening the maintenance door 212.

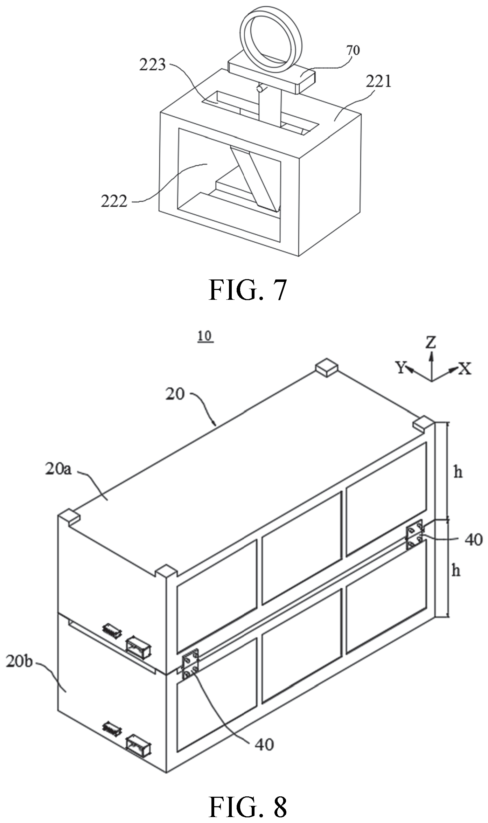

As shown in FIG. 8, the energy storage apparatus 10 provided according to an embodiment of the present application includes the container 20 provided in any one of the above embodiments.

Since the container 20 provided in any one of the above embodiments is used, the energy storage apparatus 10 provided in the embodiments of the present application has the same technical effect, which will not be repeated here.

In some embodiments, the energy storage apparatus 10 includes m containers 20. m is a positive integer greater than or equal to 2. The m containers 20 are stacked in a height direction Z. |h1+...+hm-nH| ≤ 5n (mm), in which h1, ... and hm are respectively dimensions of the m containers 20 in the height direction Z, and n is a positive integer.

The energy storage apparatus 10 includes m containers 20 stacked in the height direction Z. The dimensions of these containers 20 in the height direction Z are h1,..., and hm, respectively. Optionally, h1 to hm can be all equal or all unequal. Of course, at least two of h1 to hm can also be set equal.

Generally, during transportation, a difference between an allowable height of transported goods and the height of a single standard container has an error range of -5 mm to 5 mm. Thus, not only can the allowed space in the height direction Z during transportation be fully utilized, but also the requirements of container 20 transportation are met.

By way of example, m can be set to 2 and n to 1, or m can be set to 3 and n to 2. Of course, m and n can also be in other combinations.

|h1+...+hm-nH| ≤ 5n (mm) is set. That is, the dimension of the energy storage apparatus 10 after stacking in the height direction Z is configured to be equivalent to the dimension, in the height direction Z, of n standard containers stacked in the height direction Z, and the absolute value of a height difference between a total height (h1+...+hm) of the energy storage apparatus 10 and a total height nH of the n standard containers stacked in the height direction Z is smaller than or equal to 5n millimeters. That is, an energy storage apparatus 10 formed by stacking a plurality of containers 20 in the height direction Z is equivalent to n standard containers stacked in the height direction Z in terms of the dimension in the height direction Z, and the total height of the energy storage apparatus 10 and the n standard containers stacked in the height direction Z meet relevant error standards in terms of the dimension in the height direction Z of the container 20.

Therefore, setting |h1+...+hm-nH| ≤ 5n (mm) is conducive to fully utilizing a loadable space during transportation and meeting relevant error requirements, so that the dimension, in the height direction Z, of the m containers 20 stacked in the height direction Z is equivalent to the dimension, in the height direction Z of the container 20, of the n standard containers. Thus, this is conducive to a further reduction in the transportation cost of the energy storage apparatus 10.

In some embodiments, n ≤ 8.

Optionally, n can be 8, 7, 6, 5, 4, 3, 2, or 1.

n is set to be smaller than or equal to 8. That is to say, the energy storage apparatus 10 is configured such that during transportation, at most 8 layers of standard containers are stacked. Thus, relevant load requirements during transportation are easily met.

In some embodiments, m ≤ 12.

Optionally, m can be 12, 11, 10, 9, 8, 7, 6, 5, 4, 3, or 2.

m ≤ 12 is set. That is, the energy storage apparatus 10 is configured such that at most 12 containers 20 are stacked in the height direction Z. Thus, this is conducive to improving the structural stability of the energy storage apparatus 10, and the load-bearing capacity of the bottommost container 20 can be reduced, which contributes to reducing the load-bearing capacity of the container 20.

In some embodiments, m ≤ 8.

Optionally, m can be 8, 7, 6, 5, 4, 3, or 2.

Thus, the energy storage apparatus 10 has at most 8 containers 20 stacked in the height direction Z. This is conducive to further improving the structural stability of the energy storage apparatus 10 and further reducing the requirement for the load-bearing capacity of the container 20.

As shown in FIG. 8, in some embodiments, two containers 20 adjacent in the height direction Z are snap-fitted or connected via fasteners 40.

The fastener 40 can be at least one of a bolt and nut, a pin, a screw, a rivet, etc. Of course, the fastener 40 can also include a fixing plate, etc., for fixedly connecting two containers 20 adjacent in the height direction Z.

Two containers 20 adjacent in the height direction Z are configured to be connected by a fastener 40. The fastener 40 can be used to restrain the displacement between the two containers 20 adjacent in the height direction Z. This is conducive to reducing the risk of relative movement between two adjacent containers 20 after stacking, which thus contributes to improving the structural stability of the energy storage apparatus 10.

As shown in FIGS. 8 and 9, in some embodiments, the plurality of containers 20 include a first container 20a and a second container 20b. The first container 20a is located above the second container 20b. A limit pin 41 is provided at a bottom of the first container 20a. A limit hole 241 is provided at a top of the second container 20b. The limit pin 41 is snap-fitted to the limit hole 241.

Where the containers 20 include a first container 20a and a second container 20b, the same container 20 is either the first container 20a relative to the lower container 20, or the second container 20b relative to the upper container 20, that is, the container 20 can be either the first container 20a or the second container 20b. In other words, one container 20 can be provided with a limit pin 41 at the bottom and a limit hole 241 at the top.

Thus, two containers 20 adjacent in the height direction Z achieve engagement between the limit pin 41 at the bottom and the limit hole 241. By means of the simple structure, the purpose of restricting the relative movement between two adjacent containers 20 is achieved.

The limit hole 241 at the top of the second container 20b can be an opening 223 used for lifting the container 20. Thus, during the stage of lifting the container 20, the opening 223 is used to lift the container 20. After the container 20 is lifted in place, the opening 223 at the top of the box body 21 is used to engage with the limit pin 41 at the bottom of the adjacent upper container 20, thereby achieving restrained displacement between the two adjacent containers 20, thus contributing to simplifying the structure of the container 20.

As shown in FIGS. 10, 11, and 12, in some embodiments, a bottom of the first container 20a is provided with a first position-limiting member 23. The first position-limiting member 23 is provided with a limit recess 231. A top of the second container is provided with a second position-limiting member 24. The second position-limiting member 24 is provided with a limit hole 241. Two ends of the limit pin 41 are snap-fitted to the limit recess 231 and the limit hole 241, respectively.

The second position-limiting member 24 can be the aforementioned lifting portion. The limit hole 241 can be the aforementioned opening 223. The limit hole 241 can also be a hole arranged on the box body of the container.

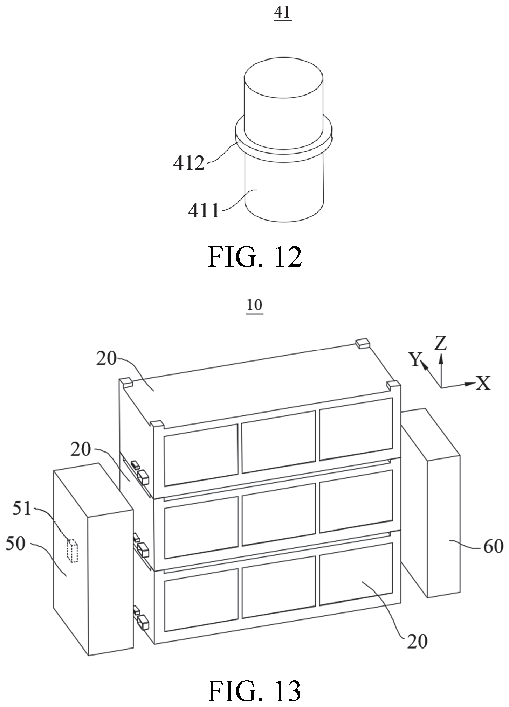

As shown in FIGS. 11 and 12, the limit pin 41 can include a body 411 and a flange 412 arranged in a middle portion of the body 411. The flange 412 is configured to protrude from the body 411 and surround the body 411. The dimension of the body 411 is smaller than the dimension of the limit recess 231 and smaller than the dimension of the limit hole 241, so that the two ends of the body 411 extend into the limit recess 231 and the limit hole 241, respectively. The dimension of the flange 412 is greater than the dimension of the limit recess 231 and greater than the dimension of the limit hole 241, so that the flange 412 is clamped between the first position-limiting member 23 and the second position-limiting member 24.

Thus, during the stacking of containers 20 in the height direction Z, the limit pin 41 is engaged with the limit recess 231 of the upper container 20 of the two adjacent containers 20 and engaged with the limit hole 241 of the lower container 20 of the two adjacent containers 20. Thus, by means of the simple structure, the purpose of restricting the relative movement between two adjacent containers 20 is achieved.

As shown in FIG. 9, in some embodiments, the limit pin 41 can be formed integrally with the first position-limiting member 23.

As shown in FIG. 13, in some embodiments, the energy storage apparatus 10 further includes an electrical compartment 50 and an electrical element 51. The electrical element 51 is accommodated in the electrical compartment 50. The electrical compartment 50 is arranged outside the container 20. The electrical element 51 is electrically connected to the battery cells 30 in the plurality of containers 20 of the energy storage apparatus 10.

Where the electrical element 51 is electrically connected to the battery cells 30 in the plurality of containers 20 of the energy storage apparatus 10, the connection of the electrical element 51 in the electrical compartment 50 to the battery cells 30 in the plurality of containers 20 achieves control over the normal operation of the battery cells 30 in the plurality of containers 20.

Where the electrical element 51 is electrically connected to the battery cells 30, the electrical connection between the electrical element 51 and the battery cells 30 can be either direct connection or indirect connection, and either power connection or signal connection. By way of example, connection lines or signal acquisition elements related to the electrical connection to the battery cells 30 can be arranged in the container 20, and relevant connection interfaces can be arranged on the box body 21. The electrical element 51 can be electrically connected to the battery cells 30 via the relevant connection interfaces, so as to acquire operation information about the plurality of battery cells 30 in the plurality of containers 20 and control the normal cycling operation of the relevant battery cells 30.

The electrical element 51 can be one or more of a master control unit, a main control unit, etc. The electrical element 51 is accommodated in the electrical compartment 50, and the electrical compartment 50 is configured to be separated from the container 20 of the energy storage apparatus 10. Thus, the electrical element 51 does not occupy the weight and volume of the container 20 and can be manufactured and transported separately from the container 20, which is conducive to reducing the transportation cost of the energy storage apparatus 10.

The energy storage apparatus 10 can also include a firefighting element. The firefighting element is used for fire protection for each of the containers 20.

The electrical element 51 can further include a firefighting control module. The firefighting control module is used for controlling the firefighting element to provide fire protection for each of the containers 20.

As shown in FIG. 13, in some embodiments, the energy storage apparatus 10 further includes a water chilling unit 60. The water chilling unit 60 is arranged outside the container 20. The water chilling unit 60 is used for heat exchange with the battery cells 30 in the plurality of containers 20 of the energy storage apparatus 10.

Thus, relevant pipelines can be arranged inside the container 20, and pipeline interfaces can be arranged on the box body 21. The water chilling unit 60 is in communication with the pipeline interfaces in the plurality of containers 20, so that a high- or low-temperature fluid is supplied to the inside of the containers 20 by the water chilling unit 60, thereby achieving heat exchange with the battery cells 30 in the container 20.

The water chilling unit 60 is arranged outside the container 20. The water chilling unit 60 does not occupy the weight and volume of the container 20 and can be manufactured and transported separately from the container 20, which is conducive to further reducing the transportation cost of the energy storage apparatus 10.

As shown in FIGS. 8 to 13, in some embodiments, the energy storage apparatus 10 includes m containers 20, a limit pin 41, an electrical compartment 50, an electrical element 51, and a water chilling unit 60. m is a positive integer greater than or equal to 2. The m containers 20 are stacked in a height direction Z. |h1+...+hm-nH| ≤ 5n (mm), in which h1, ... and hm are respectively dimensions of the m containers 20 in the height direction Z, and n is a positive integer. The container 20 includes a box body 21 and battery cells 30. The battery cells 30 are accommodated inside the box body 21. A dimension of the container 20 in a length direction X and a dimension of the container in a width direction Y are respectively consistent with the dimensions of a standard container. A dimension h of the container 20 in a height direction Z is smaller than a dimension H of a standard container in the height direction Z of the container 20. The electrical element 51 is accommodated in the electrical compartment 50. The electrical element 51 is electrically connected to the battery cells 30 in the plurality of containers 20 of the energy storage apparatus 10. The water chilling unit 60 is used for heat exchange with the plurality of containers 20 of the energy storage apparatus 10. The weight of the container 20 is smaller than or equal to 45 tons. The weight of the container 20 is M, the total weight of the battery cells 30 in the box body 21 is M1, and M1/M ≥ 60%. The volume of the container 20 is V, the total volume of the battery cells 30 in the box body 21 is v, and v/V ≥ 30%. The box body 21 includes a framework 211 and a maintenance door 212. The maintenance door 212 is movably connected to the framework 211, so as to open or close the maintenance door 212. The bottom of the box body 21 has a limit recess 231. The limit pin 41 is engaged with the limit recess 231 in the upper container of the two adjacent containers 20 and engaged with the opening 223 in the lower container 20, so as to restrict the relative displacement between the two adjacent containers 20 in the direction intersecting with the height direction Z.

Although the present application has been described with reference to the preferred embodiments, various improvements may be made and parts therein may be replaced with equivalents without departing from the scope of the present application. In particular, the technical features mentioned in various embodiments can be combined in any manner as long as there is no structural conflict. The present application is not limited to the specific embodiments disclosed herein but includes all the technical solutions that fall within the scope of the claims.

## Claims

1. A container, comprising a box body and battery cells accommodated in the box body, wherein a dimension of the container in a length direction thereof and a dimension of the container in a width direction thereof are respectively consistent with those of a standard container, and a dimension h of the container in a height direction thereof is smaller than a dimension H of the standard container in a height direction thereof.

2. The container according to claim 1, wherein |2h-H| ≤ 5 mm or |3h-H| ≤ 5 mm.

3. The container according to claim 1 or 2, wherein a weight of the container is smaller than or equal to 45 tons.

4. The container according to any one of claims 1 to 3, wherein a weight of the container is M, a total weight of the battery cells in the box body is M1, and M1/M ≥ 60%.

5. The container according to claim 4, wherein M1/M ≥ 80%.

6. The container according to any one of claims 1 to 5, wherein a volume of the container is V, a total volume of the battery cells in the box body is v, and v/V ≥ 30%.

7. The container according to claim 6, wherein v/V ≥ 50%.

8. The container according to any one of claims 1 to 7, wherein a top of the box body is provided with a plurality of lifting portions configured to be capable of engaging with a spreader, so as to lift the container.

9. The container according to claim 8, wherein the lifting portion comprises a load-bearing portion, a receptacle, and an opening, wherein the receptacle is located inside the load-bearing portion, the opening brings the receptacle in communication with an exterior of the receptacle, and the opening is located at a top of the load-bearing portion.

10. The container according to any one of claims 1 to 9, wherein a bottom of the box body has a limit pin used for restrained engagement with the box body of an adjacent container.

11. The container according to any one of claims 1 to 10, wherein a plurality of batteries arranged in rows and columns are provided inside the box body, and each of the batteries comprises a plurality of battery cells.

12. An energy storage apparatus, comprising the container according to any one of claims 1 to 11.

13. The energy storage apparatus according to claim 12, wherein the energy storage apparatus comprises m containers, m being a positive integer greater than or equal to 2, wherein the m containers are stacked in a height direction, and |h1+...+hm-nH| ≤ 5n (mm), in which h1, ... and hm are respectively dimensions of the m containers in the height direction, and n is a positive integer.

14. The energy storage apparatus according to claim 13, wherein n ≤ 8.

15. The energy storage apparatus according to claim 13 or 14, wherein m ≤ 8.

16. The energy storage apparatus according to claim 15, wherein m ≤ 3.

17. The energy storage apparatus according to any one of claims 12 to 16, wherein two containers adjacent in the height direction are snap-fitted or connected to each other via fasteners.

18. The energy storage apparatus according to claim 17, wherein the plurality of containers comprise a first container and a second container, wherein the first container is located above the second container, a limit pin is provided at a bottom of the first container, and a limit hole is provided at a top of the second container, wherein the limit pin is snap-fitted into the limit hole.

19. The energy storage apparatus according to claim 18, wherein:
the bottom of the first container is provided with a first position-limiting member having a limit recess, and a top of the second container is provided with a second position-limiting member having a limit hole; and
two ends of the limit pin are snap-fitted into the limit recess and the limit hole, respectively.

20. The energy storage apparatus according to any one of claims 12 to 19, further comprising an electrical compartment and an electrical element, wherein the electrical element is accommodated in the electrical compartment, the electrical compartment is arranged outside the container, and the electrical element is electrically connected to the battery cells in the plurality of containers of the energy storage apparatus.

21. The energy storage apparatus according to any one of claims 12 to 20, further comprising a water chilling unit, wherein the water chilling unit is arranged outside the container and used for heat exchange with the battery cells in the plurality of containers of the energy storage apparatus.
